# EUROPÄISCHE PATENTANMELDUNG

(11) **EP 1 378 470 A2**
(43) Veröffentlichungstag der Anmeldung: **07.01.2004**
(21) Anmeldenummer: 03013666.7
(22) Anmeldetag: 17.06.2003
(51) Int. Cl.: B65G 59/04

(54) **Vorrichtung zum vereinzelten Aufnehmen, Transportieren und positionierten Ablegen von Werkstücken, insbesondere von Platinen**

(30) Priorität: 05.07.2002 DE 20210518 U
(71) Anmelder: Rietsche, Peter, 77781 Biberach (DE); Roser, Eugen, 77781 Biberach (DE)
(72) Erfinder: Rietsche, Peter, 77781 Biberach (DE); Roser, Eugen, 77781 Biberach (DE)
(74) Vertreter: Thoma, Friedrich X., Dipl.-Ing.(FH)

(57) **Zusammenfassung**

Eine Vorrichtung zum vereinzelten Aufnehmen, Transportieren und positioniertem Ablegen von Werkstücken, insbesondere von Platinen, ist mit einem steuerbar auf einer Linearführung (7) oder dergl. Führung verfahrbaren Schlitten (10), einer am Schlitten (10) steuerbar vorgesehenen Schwenkeinheit (11) und mindestens einem an der Schwenkeinheit (11) angeordneten Förderarm (12) mit mindestens einem steuerbaren Greifer (14) versehen, zur vereinzelten Aufnahme eines Werkstücks bzw. einer Platine (6) aus einer Entnahmeeinheit (28) und zum Verfahren und weiterverarbeitungspositionierten Ablegen des Werkstücks bzw. einer Platine (6) auf einer Referenzplatte (15) oder dergl. Ablage.

## Beschreibung

Die Erfindung betrifft eine Vorrichtung zum vereinzelten Aufnehmen, Transportieren und positionierten Ablegen von Werkstücken, insbesondere von Platinen, mit den Merkmalen nach dem Oberbegriff des Schutzanspruchs 1.

Bei einer Vorrichtung zum vereinzelten Aufnehmen, Transportieren und positionierten Ablegen von Werkstücken bzw. von Platinen, ist es erforderlich, daß die, auf der Vorrichtung unmittelbar oder mittelbar in einer Entnahmevorrichtung oder einem Behälter zueinander gestapelten Werkstücke bzw. Platinen, maschinell vereinzelt aufgenommen und zu einer Referenzplatte transportiert und dort positioniert, zur unmittelbaren oder mittelbaren Weiterverarbeitung, beispielsweise durch ein Bearbeitungszentrum, abgelegt werden. Dabei soll sichergestellt sein, daß die Vorrichtung den jeweiligen Erfordernissen entsprechend spezifisch anpaßbar bzw. einstellbar oder programmierbar ist.

Aus der DE-U-19 14 569 ist eine Verkettungsmaschine zum Transportieren oder Stapeln von Fertigungsteilen verschiedenster Formen mit beliebiger 0berflächenbeschaffenheit bekannt, die aus einer hydraulisch-horizontalen Längsführung besteht, die auch als Schwenkführung aus hydraulisch-vertikalen Hubführungen mit einem oder einer Anzahl von Greifern, Gummisaugern, Elektromagneten oder mechanisch arbeitenden Zangen ausgebildet sein kann, wobei hydraulisch betriebene Steuerzylinder die Gesamtanlage und die Greifer lenken und betätigen.

Diese bekannte Verkettungsmaschine soll zwar universell anwendbar sein, die gezeigten und beschriebenen funktions- und ausführungstechnischen Merkmale schränken jedoch den technischen Einsatz offensichtlich ein.

Der Erfindung liegt die Aufgabe zu grunde, eine Vorrichtung der eingangs genannten Art zu schaffen, die insbesondere platinenartige Materialzuschnitte aus beliebigen, hinreichend steifen, Werkstoffen, beispielsweise aus Metallblech, Kunststoffen, Kartonagen, Keramiken, Glas oder aus Holz, vereinzeln und positionieren. Dabei soll sichergestellt sein, daß die Vorrichtung sowohl als integrierbare Baueinheit oder als eigenständige mittelbare Baueinheit ausgebildet bzw. aufgebaut sein kann.

Diese Aufgabe wird mit den Merkmalen im kennzeichnenden Teil des Patentanspruchs 1 gelöst und in den Unteransprüchen sind weitere vorteilhafte Einzelheiten beansprucht.

Vorteilhaft bei der neuen Vorrichtung ist nicht nur der zweckmäßige, linear verfahrbare, Schlitten mit der dort vorgesehenen Schwenkeinheit zum positionierten Aufnehmen, Transportieren und Ablegen eines Werkstücks bzw. einer Platine aus einer sogenannten Entladeeinheit hin zu einem Schwenkrahmen mit einer Referenzplatte, sondern auch die, an der Schwenkeinheit einzeln oder zu mehreren, in einem einstellbaren Abstand zueinander angeordneten, zweckmäßigerweise einseitig gelagerten, Entnahmearmen versehen ist. Dabei sind die Entnahmearme zweckmäßigerweise mit einstellbaren, spezifisch auf ein Werkstück bzw. eine Platine einstellbaren Greifern versehen, zum positionierten Aufnehmen, Transportieren und Ablegen eines Werkstücks bzw. einer Platine auf einer sogenannten Referenzplatte, auf der das vereinzelte Werkstück bzw. eine Platine weiterverarbeitbar ist.

Vorteilhaft bei der neuen Vorrichtung ist außerdem die vorgesehene zweckmässige bauliche Zusammenfassung des Vorratsbehälters bzw. der Entnahmeeinheit für die zu vereinzelnden Werkstücke bzw. Platinen, mit der Linearführungsund Schwenkeinheit und der Referenzplatte zu einer maschinellen Baueinheit auf einem, insbesondere einstückigen Rahmengestell.

Zweckmäßigerweise und vorteilhaft ist das Rahmengestell im Bereich der vorderseitigen, der Entnahmeeinheit benachbarten, Rahmenecke diagonal abgesenkt, sodaß die gesamte Vorrichtung diagonal, so, daß die in der Entnahmeeinheit gelagerten Werkstücke bzw. Platinen in der abgesenkten Ecke der Entnahmeeinheit im Rahmengestell dreiseitig schwerkraftschlüssig lagenfixiert sind.

Vorteilhaft ist ferner der übersichtliche Aufbau der Vorrichtung, der eine zweckmäßige, rationelle und wirtschaftliche Bedienung und Wartung ermöglicht.

Ein Ausführungsbeispiel der neuen Vorrichtung ist in Zeichnungen dargestellt und wird im folgenden näher erläutert. Es zeigen
- Fig. 1: eine schaubildliche Seitenansicht der Vorrichtung,
- Fig. 2: eine schaubildliche Draufsicht der Vorrichtung,
- Fig. 3: eine schaubildliche Vorderansicht der Vorrichtung,
- Fig. 4: eine Ansicht der Vorrichtung mit den drei schematisch dargestellten Funktionstellungen, der Werkstück-Aufnahmestellung, der Werkstück-Transportstellung und der Werkstück-Ablegestellung,
- Fig. 5: eine schaubildliche Teilansicht der Vorrichtung in einer Funktionsstellung des Schlittens der Schwenkeinheit, zum vereinzelten Aufnehmen eines Werkstücks bzw. einer Platine durch die Greifer der Schwenkeinheit,
- Fig. 6: eine schaubildliche Teilansicht der Vorrichtung in einer mobilen Funktionsmittelstellung des Schlittens der Schwenkeinheit beim Transportieren des auf der Schwenkeinheit lagenfixierten Werkstücks bzw. einer Platine hin zu einer Referenzplatte und
- Fig. 7: eine schaubildliche Teilansicht der Vorrichtung in der Funktionsendstellung des Schlittens der Schwenkeinheit, beim Ablegen des Werkstücks bzw. einer Platine durch die Greifer der Schwenkeinheit auf eine Referenzplatte.

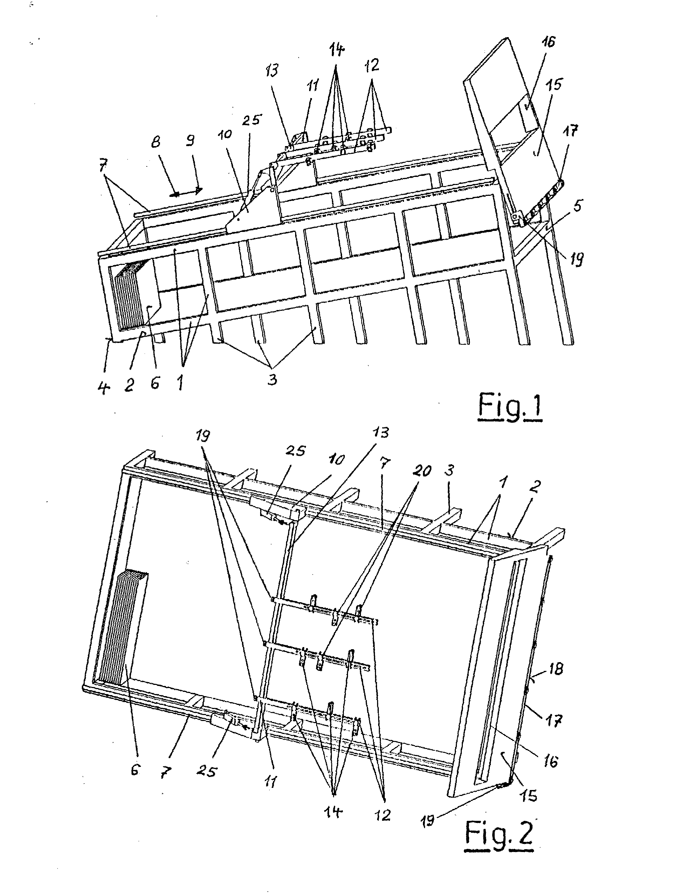

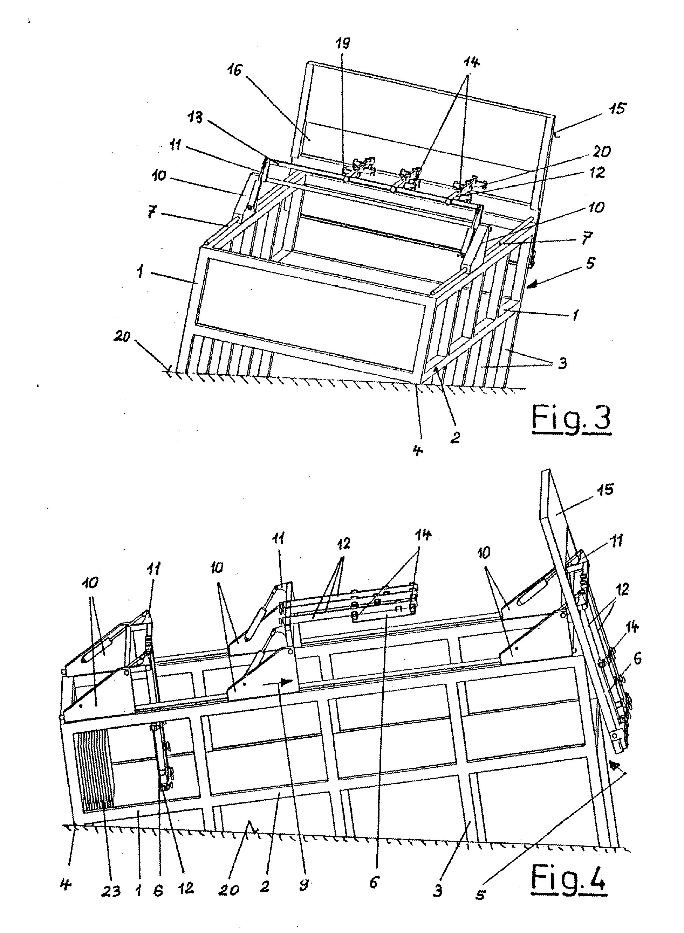

Die, in den Fig. 1 bis 7 dargestellte Vorrichtung besteht im wesentlichen aus drei, räumlich insbesondere auf einem Rahmengestell 1 zueinander lagenfixierten und funktionstechnisch miteinander korrespondierender Komponenten, die im folgenden, in den Einzelheiten, näher erläutert werden.

Im einzelnen zeigt 1 das Rahmengestell der Vorrichtung, das auf den beiden Längsseiten 2 zweckmäßigerweise jeweils mit mehreren Gestellstützen 3 versehen ist, die in zueinander gleichem Abstand einseitig angeordnet sind.

Wie aus den einzelnen Figuren ersichtlich wird, ist das Rahmengestell 1, insbesondere die einzelnen Gestellstützen 3 derart ausgebildet, daß die Vorrichtung zu der einen vorderseitigen Gestellecke 4 hin diagonal gegenüber der Gestellrückseite 5 abgesenkt ist, mit dem dadurch erzielten Vorteil, daß die im vorderen Teil des Rahmengestells 1 funktionskonform zur Entnahme gelagerten Werkstücke bzw. Platinen 6, sich schwerkraftkonform präzise im Rahmengestell 1 gestapelt ausrichten, wie dies aus den einzelnen Figuren ersichtlich wird. 20 bezeichnet eine Stellfläche bzw. einen Boden.

7 bezeichnet zwei zueinander parallel verlaufend auf dem Rahmengestell 1 angeordnete Linearführungen für einen, in den Pfeilrichtungen 8 und 9 steuerbar verfahrbaren, Schlitten 10, der mit einer, insbesondere hydrostatisch, mittels zweier Hydraulikzylinder 25, steuerbaren Schwenkeinheit 11 ausgestattet ist, zum vereinzelten Aufnehmen, zum Transport und zur positionieren Ablage eines Werkstücks bzw. einer Platine 6 auf einer sogenannten Referenzplatte 15 zur Übergabe an eine oder mehrere weiterführende Bearbeitungsmaschinen bzw. Bearbeitungsstationen.

Es liegt im Rahmen der Erfindung, daß anstelle der beiden zueinander parallel verlaufenden Linearführungen 7, auch nur eine einzige oder für Sonderanwendungen mehr als zwei Linearführungen 7 zweckmäßigerweise vorgesehen sein können.

Auch liegt es im Rahmen der Erfindung, daß anstelle der Hydraulikzylinder 25 zur Steuerung der Schwenkeinheit 11 auch sogenannte pneumatisch betriebene Zylinder, oder pneumo-hydraulische Zylinder zweckmäßig einsetzbar sind. Es ist jedoch auch vorgesehen, daß die Schwenkeinheit 11 motorisch, insbesonders elektromotorisch mittels eines Servomotors betätigt wird.

Die Linearführungen 7 sind bei einem mittelbaren Antrieb des Schlittens 10 mit der Schwenkeinheit 11 zweckmäßigerweise als sogenannte oberflächenglatte Formschienen ausgebildet. Bei einem unmittelbaren Antrieb des Schlittens 10 mit der Schwenkeinheit 11 sind die Linearführungen 7 als Kugelumlaufspindelantrieb, oder als Zahnstange, oder Riemen bzw. Zahnriemen, oder Kette, für den Eingriff eines Zahnradgetriebeantriebs zweckmäßigerweise ausgebildet bzw. ausgestattet. Es liegt im Rahmen der Erfindung, daß auch ein pneumatischer Linearantrieb im Bereich mindestens einer der beiden Linearführungen 7 zum Antrieb des Schlittens 10 mit der Schwenkeinheit 11 vorgesehen sein kann.

Die Schwenkeinheit 11 ist im einzelnen mit einem oder mehreren, insbesondere parallel zueinander verlaufend angeordneten Förderarmen 12 ausgestattet. Die Förderarme 12 sind insbesondere einseitig auf der Schwenkeinheitswelle 13 zweckmäßigerweise axial hintereinander liegend, mittels einzelner Schrauben 19 einstellbar kraftschlüssig angeordnet.

An einem Förderarm 12 sind Greifer 14 angeordnet, die mittels Schrauben 20 einzeln, konform zu einem zu vereinzelnden Werkstück bzw. einer Platine 6 kraftschlüssig auf einem Förderarm 12 justierbar sind. Die Greifer 14, die als sogenannte Unterdruck-Sauger oder Unterdruck-Saugmatten und/oder als Elektromagnete oder als mechanisch funktionale Greifer 14 ausgebildet sein können, sind auf die vereinzelt zu greifenden, zu transportierenden und zur Weiterverarbeitung auf einer sogenannten Referenzplatte 15 abzulegenden bzw. zu positionierenden Werkstücke bzw. Platinen 6 spezifisch einstellbar auf einem Förderarm 12 der Schwenkeinheit 11 angeordnet.

Die Referenzplatte 15 ist zweckmäßigerweise mit einem rahmenförmigen Durchgriff 16 versehen. Die Referenzplatte 15 ist im Neigungswinkel zu den Linearführungen 4 verstellbar am Rahmengestell 1 angeordnet. 17 bezeichnet ein Förderband, das am unteren Rand 18 der Referenzplatte 15, zum Transport eines auf der Referenzplatte 15 abgelegten Werkstücks bzw. einer Platine 6 hin zu einer Referenzposition, einem Anschlag 19 vorgesehen ist. Diese Referenzposition eines auf der Referenzplatte 15 abgelegten Werkstücks bzw. einer Platine 6 entspricht der Übergabeposition des Werkstücks bzw. einer Platine 6 an eine weiterverarbeitende, nicht näher dergestellte, Bearbeitungsmaschine, beispielsweise einem Biegeroboter oder einer Gewindeschneidmaschine, um nur einige Anmendungsbeispiele der neuen Vorrichtung zu nennen.

Es liegt im Rahmen der Erfindung, daß die Referenzplatte 15 auch jede andere zweckmäßige räumliche Position zur Ablage eines vereinzelt vom Schlitten 10 über die Schwenkeinheit 11 angelieferten und abgelegten Werkstücks bzw. Platine 6, gegenüber dem Rahmengestell 1 einnehmen kann. Auch ist es für bestimmte Einsatzfälle vorgesehen, daß die Referenzplatte 15 eine andere werkzeugspezifische bzw. platinenspezifische Ausgestaltung aufweist, und/oder daß der Durchgriff 16 an der Referenzplatte 15 fehlt.

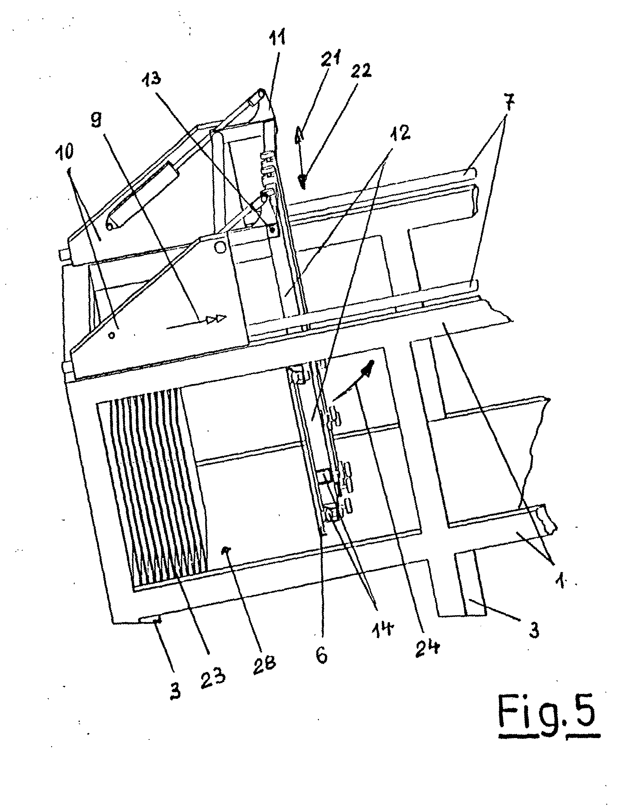

In den Fig. 5, 6 und 7 sind die einzelnen Funktionsstellungen des Schlittens 10 der Schwenkeinheit 11 noch einmal im einzelnen dargestellt.

In der Fig. 5 bezeichnet 1 das Rahmengestell mit einer Gestellstütze 3. Auf dem Rahmengestell 1 sind, einander gegenüberliegend, die beiden zueinander parallel verlaufenden Linearführungen 7 angeordnet. 10 zeigt den Schlitten mit der dort hydropneumatisch betätigbaren, auf der Welle 13 gelagerten, Schwenkeinheit 11. 12 bezeichnet die einseitig an der Schwenkeinheit 11 in den Pfeilrichtungen 21 bzw. 22 justierbar angeordneten Förderarme mit den auf den Förderarmen 12 vorgesehenen, werkstück- bzw. platinenkonform einstellbaren Greifern 14.

Die Schwenkeinheit 11 ist, wie die Fig. 5 zeigt, nach unten in das Rahmengestell 1 eingeschwenkt und hat mit den, im vorliegenden Falle saugenden, Greifern 14 eine Platine 6 vereinzelt vom Platinenstapel 23 aufgenommen. Der Platinenstapel 23 ist zweckmäßigerweise lagenfixiert, in sogenannter aufrechter Schräglage, im Rahmengestell 1 gelagert. Das Rahmengestell 1 dient zu diesem Zweck als Entnahmeeinheit bzw. Vorratsbehälter 28. Es liegt hier im Rahmen der Erfindung, daß zur entnahmekonformen Lagerung der vereinzelt zu entnehmenden Werkzeuge bzw. Platinen 6 eine Entnahmeeinheit 28 bzw. ein Vorratsbehälter in das Rahmengestell 1 lösbar eingesetzt ist.

Um sicherzustellen, daß beim Aufnehmen der Platine 6 vom Platinenstapel 23 nur eine vereinzelte Platine 6 von der Schwenkeinheit 11 aufgenommen wird, wird die vorderseitige Platine 6 auf dem Platinenstapel 23 mittels Druckluft oder mittels eines nicht näher dargestellten Spreizmagneten vom Platinenstapel 23 getrennt, falls die Platinen 6 auf dem Platinenstapel 23, beispielsweise durch Feuchtigkeitsrückstände, zusammenhaften.

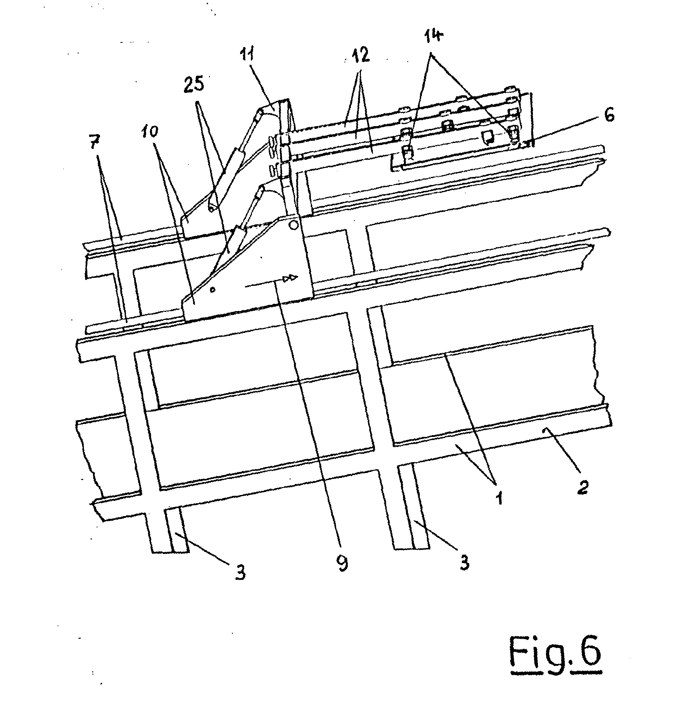

Die vereinzelt von den Greifern 14 der Schwenkeinheit 11 aufgenommene Platine 6 wird nun in Pfeilrichtung 24 hochgeschwenkt und mit dem Schlitten 10 in Pfeilrichtung 9 auf den Linearführungen 7 verfahren, wie dies aus der Fig. 6 ersichtlich wird. 1 bezeichnet dort das Rahmengestell mit den Gestellstützen 3 auf den Rahmengestell-Längsseiten 2. 7 zeigt die beiden Linearführungen und 10 kennzeichnet den Schlitten mit der Schwenkeinheit 11, den Förderarmen 12 und den Greifern 14. 6 markiert die vereinzelt aufgenommene und in Pfeilrichtung 9 vom Schlitten 10 verfahrene Platine. 25 zeigt die beiden Hydraulikzylinder zur Betätigung der Schwenkeinheit 11.

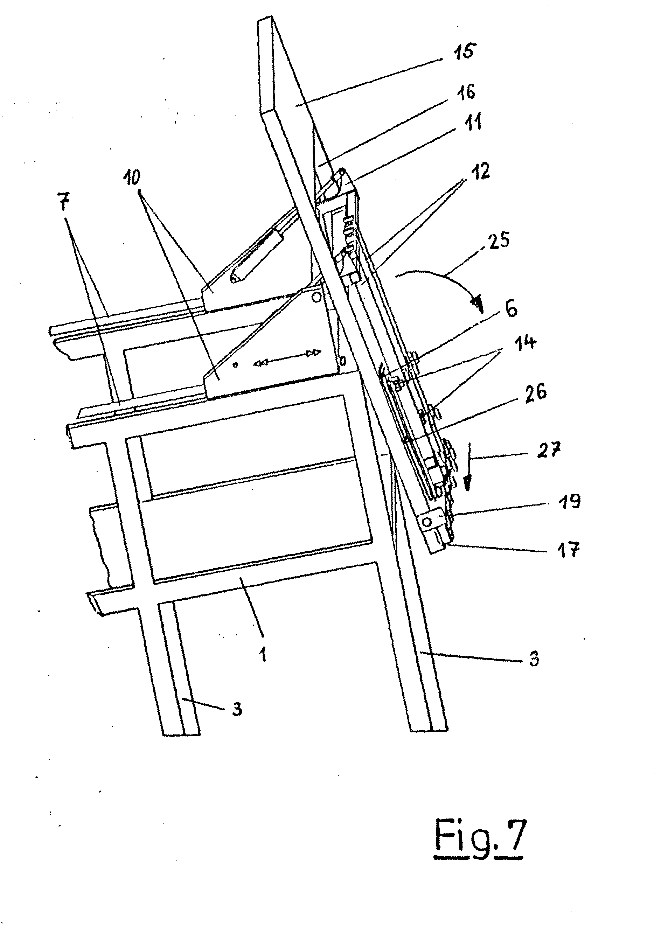

Wie die Fig. 7 zeigt, ist der Schlitten 10 mit der Platine 6 in der zweiten Endlage, der Referenzplatte 15 benachbart, angekommen. Die Schwenkeinheit 11 greift in dieser Position mit ihren Förderarmen 12 und der dort von den Greifern 14 fixierten Platine 6 durch den Durchgriff 16 der Referenzplatte 15, schwenkt um den Neigungswinkel der Referenzplatte 15 in Pfeilrichtung 25 auf die Referenzplattenaußenseite 26 ab und gibt die Platine 6 durch die Greifer 14 frei. Die Platine 6 wird in dieser Position von dem an der Referenzplatte 15 vorgesehenen Förderband 17, in Pfeilrichtung 27 in die Referenz- oder Übergabeposition, an den Referenzplatten-Anschlag 19 geführt, zur Weiterverarbeitung bzw. Weitergabe an eine Bearbeitungsmaschine bzw. Bearbeitungseinrichtung. Der Neigungswinkel der Referenzplatte 15 zum Verlauf der Linearführung 7 ist beliebig einstellbar.

Es liegt im Rahmen der Erfindung, daß die Linearführung 7 mit dem Schlitten 10 und der Schwenkeinheit 11 mit den Förderarmen 12 und den Greifern 14 auf einem Rahmengestell 1 als eine eigenständige Funktionseinheit aufgebaut ist, und daß die Entnahmeeinheit 28 bzw. ein Vorratsbehälter für die Werkstücke bzw. Platinen 6, als auch die Referenzplatte 15, als jeweils eigenständige Funktionselemente ausgebildet sind, die erforderlichenfalls einander funktionskonform zugeordnet werden können.

Mit der vorliegenden Erfindung ist es möglich und vorgesehen, daß mit der Schwenkeinheit 11 und den dort vorgesehenen Förderarmen 12 pro Arbeitsgang mehr als ein vereinzeltes Werkstück bzw. mehrere Platinen 6 positioniert aufgenommen, transportiert und auf der Referenzplatte 15 oder einer geeigeten Abnahme- bzw. Weitergabeeinrichtung abgelegt werden können.

## Patentansprüche

1. Vorrichtung zum vereinzelten Aufnehmen, Transportieren und positionierten Ablegen von Werkstücken, insbesondere von Platinen, **dadurch gekennzeichnet, daß** die Vorrichtung mit einem steuerbar auf einer Linearführung (7) oder dergl. Führung verfahrbaren Schlitten (10), einer am Schlitten (10) steuerbar vorgesehenen Schwenkeinheit (11) und mindestens einem an der Schwenkeinheit (11) angeordneten Förderarm (12) mit mindestens einem steuerbaren Greifer (14) versehen ist, und daß der Schlitten (10) mit der Schwenkeinheit (11) und dem Greifer (14) aus einer Entnahmeeinheit (28) ein Werkstück bzw. eine Platine (6) vereinzelt aufnimmt, verfährt und auf einer Referenzplatte (15) oder dergl. Ablage positioniert zur Weiterverarbeitung ablegt.

2. Vorrichtung nach Anspruch 1, **dadurch gekennzeichnet, daß** die Schwenkeinheit (11) mit mehreren, parallel zueinander angeordneten, einseitig an der Schwenkeinheitswelle (13) angeordneten, einzeln einstellbaren, Förderarmen (14) versehen ist.

3. Vorrichtung nach Anspruch 1 und 2, **dadurch gekennzeichnet, daß** die Schwenkeinheit (11) hydropneumatisch gesteuert und angetrieben ist.

4. Vorrichtung nach Anspruch 3, **dadurch gekennzeichnet, daß** die Schwenkeinheit (1) mittels zweier Hydraulikzylinder (25) gesteuert und angetrieben ist.

5. Vorrichtung nach Anspruch 1 bis 4, **dadurch gekennzeichnet, daß** die Linearführung (7) aus zwei zueinander parallel verlaufend angeordneten Führungsschienen gebildet ist.

6. Vorrichtung nach Anspruch 1 bis 5, **dadurch gekennzeichnet, daß** der bzw. die Greifer (14) auf einem Förderarm (12) als hydraulisch betätigter Sauger oder als Elektromagnet ausgebildet ist.

7. Vorrichtung nach Anspruch 1 bis 6, **dadurch gekennzeichnet, daß** zur vereinzelten Ablage und zur Positionierung eines vereinzelt aufgenommenen und transportierten Werkstücks bzw. einer Platine (6) die Vorrichtung mit einer Referenzplatte (15) versehen ist.

8. Vorrichtung nach Anspruch 7, **dadurch gekennzeichnet, daß** die Referenzplatte (15) mit einem Referenzplatten-Anschlag (19) zur Lagenfixierung eines Werkstücks bzw. einer Platine (6) versehen ist.

9. Vorrichtung nach Anspruch 7 und 8, **dadurch gekennzeichnet, daß** zur Überführung eines auf der Referenzplatte (15) abgelegten Werkstücks bzw. Platine (6) in die Referenz- oder Übergabeposition die Referenzplatte (15) mit einem am unteren Rand (18) der Referenzplatte (15) vorgesehenen Förderband (17) versehen ist.

10. Vorrichtung nach Anspruch 1 bis 9, **dadurch gekennzeichnet, daß** der Neigungswinkel der Referenzplatte (15) zur Linearführung (4) beliebig einstellbar ist.

11. Vorrichtung nach Anspruch 1 bis 10, **dadurch gekennzeichnet, daß** die Reerenzplatte (15) mit einem rahmenförmigen Durchgriff (16) für die Schwenkinheit (11) versehen ist.

12. Vorrichtung nach Anspruch 1 bis 11, **dadurch gekennzeichnet, daß** die Referenzplatte (15) in diagonaler Schräglage angeordnet ist.

13. Vorrichtung nach Anspruch 1 bis 12, **dadurch gekennzeichnet, daß** die in der Entnahmeeinheit (28) bzw. in einem Vorratsbehälter im Rahmengestell (1) eingestapelten Werkstücke bzw. die Platinen (6) im Platinenstapel (23) in Schräglage eingestapelt sind.

14. Vorrichtung nach Anspruch 1 bis 13, **dadurch gekennzeichnet, daß** zum Lösen einer vereinzelt vom Platinenstapel (23) abzuhebenden, am Platinenstapel (23) haftenden Platine (6) eine Spreizhilfe mit Druckluft oder mit einem Elektrospreizmagneten vorgesehen ist.

15. Vorrichtung nach Anspruch 1 bis 11, **dadurch gekennzeichnet, daß** die Gestellstützen (3) für das Rahmengestell (1) derart bemessen und angeordnet sind, daß die gesamte funktionelle Vorrichtung zur uorderseitigen Gestellecke (4) hin diagonal gegenüber der Gestellecke auf der Gestellrückseite (5) abgesenkt ist.
